# EUROPÄISCHE PATENTSCHRIFT

(11) **EP 1 714 109 B1**
(45) Veröffentlichungstag und Bekanntmachung des Hinweises auf die Patenterteilung: **25.07.2007**
(21) Anmeldenummer: 05707841.2
(22) Anmeldetag: 25.01.2005
(51) Int. Cl.: G01B 11/02, G01B 11/06, G01B 11/24, G01B 11/30, G01B 21/20, G02B 21/00

(54) **KONFOKALER ABSTANDSSENSOR**
CONFOCAL DISTANCE SENSOR
CAPTEUR DE DISTANCE A FOYER COMMUN

(30) Priorität: 13.02.2004 DE 102004007213
(43) Veröffentlichungstag der Anmeldung: 25.10.2006
(73) Patentinhaber: SIEMENS AKTIENGESELLSCHAFT, 80333 München (DE)
(72) Erfinder: SCHICK, Anton, 84149 Velden (DE)
(86) Internationale Anmeldenummer: PCT/EP2005/050314
(87) Internationale Veröffentlichungsnummer: WO 2005/078383

(56) Entgegenhaltungen:
- DE-A1- 10 125 885
- US-A- 4 585 349
- US-A- 5 785 651
- US-A- 5 887 009

## Beschreibung

Die Erfindung betrifft einen Sensor zur schnellen optischen Abstandsmessung nach dem konfokalen Abbildungsprinzip zur Ermittlung von Abstands- und/oder Höhenwerten einer Oberfläche.

Ein für die dreidimensionale Vermessung von Oberflächenstrukturen bekanntes Verfahren basiert auf dem sog. konfokalen Prinzip. Hierbei wird eine punktförmige Lichtquelle, welche gewöhnlich durch eine Lochblende definiert wird, auf die Oberfläche des zu erfassenden Objekts abgebildet. Das von der Oberfläche zurückgestreute Licht wird wiederum auf einen nahezu punktförmigen Detektor abgebildet, welcher ebenfalls üblicherweise durch eine Lochblende definiert wird. Die auf den Detektor auftreffende Lichtintensität ist genau dann maximal, wenn sowohl die Objekt- als auch die Detektorebene im Brennpunkt der jeweiligen Optik liegen. Befindet sich die zu untersuchende Objektoberfläche außerhalb der Brennebene, so erfolgt eine Aufweitung des Messstrahls vor dem punktförmigen Detektor und die messbare Intensität nimmt stark ab.

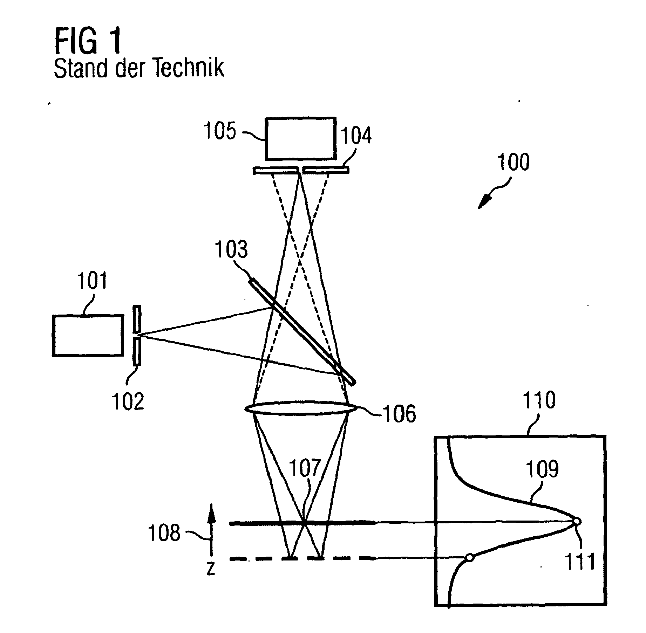

Im folgenden wird anhand von Figur 1 die bekannte Abstandsmessung nach dem konfokalen Prinzip erläutert. Ein konfokaler Sensor 100 weist eine Lichtquelle 101, eine erste Lochblende 102, einen Strahlteiler 103, eine zweite Lochblende 104, einen Lichtdetektor 105 und ein Objektiv 106 auf. Die erste Lichtblende 102 ist unmittelbar vor der Lichtquelle 101 angeordnet, so dass das System aus Lichtquelle 101 und erster Lochblende 102 wie eine Punktlichtquelle wirkt, welche eine effektive lichtemittierende Fläche aufweist, die dem Querschnitt der Öffnung der ersten Lochblende 102 entspricht. Entsprechend ist die zweite Lochblende 104 unmittelbar vor dem Lichtdetektor 105 angeordnet. Der Lichtdetektor 105, die zweite Lochblende 104, der Strahlteiler 103, das Objektiv 106 und der aktuell zu vermessende Punkt der zu erfassenden Oberfläche (nicht dargestellt) liegen auf einer Achse, welche mit der optischen Achse des Objektivs 106 zusammenfällt.

Das von der Punktlichtquelle emittierte Licht trifft zunächst auf den Strahlteiler 103. Dieser ist relativ zu der optischen Achse schräg gestellt, so dass das von der Punktlichtquelle emittierte Licht nach Reflexion an dem Strahlteiler 103 auf das Objektiv 106 gerichtet und von diesem auf einen Brennpunkt 107 fokussiert wird, welcher sich zumindest in der Nähe der zu vermessenden Oberfläche befindet. Das von der Oberfläche zumindest teilweise zurückgestreute Licht wird wiederum mittels des Objektivs 106 auf die zweite Lochblende 104 abgebildet. Zu dieser Abbildung trägt nur das Licht bei, welches ohne weitere Ablenkung durch den Strahlteiler 103 transmittiert wird. Die beiden Blenden 102 und 104 sind relativ zu der Brennebene des Objektivs 106 konfokal angeordnet, d.h. der Abstand zwischen der zweiten Lochblende 104 und dem Objektiv 106 ist gleich der Summe der Abstände zwischen erster Lochblende 102 und Strahlteiler 103 und zwischen Strahlteiler 103 und Objektiv 106. Für die optischen Abbildungen innerhalb des Sensors 100 bedeutet dies, dass die Lochblende 102 über Reflexion an dem Strahlteiler 103 von dem Objektiv 106 auf den Brennpunkt 107 abgebildet wird, und dass der Brennpunkt 107 mittels dem Objektiv 106 auf die zweite Lochblende 104 abgebildet wird.

Die eigentliche Abstandsmessung erfolgt dadurch, dass der gesamte Sensor 100 relativ zu der nicht dargestellten zu vermessenden Oberfläche in z-Richtung 108 bewegt wird. Im Verlauf dieser Bewegung wird die von dem Lichtdetektor 105 gemessene Lichtintensität erfasst. Der Verlauf 109 der gemessenen Lichtintensität als Funktion des Abstandes zwischen der Sensorvorrichtung 100 und der zu vermessenden Oberfläche ist in dem Einschub 110 skizziert. Es zeigt sich genau dann ein Maximum 111, wenn der Brennpunkt 107 unmittelbar auf der zu vermessenden Oberfläche liegt. Anders ausgedrückt erhält man das Maximum 111, wenn die Öffnung der ersten Lochblende 102 auf eine möglichst kleine Fläche auf der zu vermessenden Oberfläche abgebildet wird. Bei der konfokalen Anordnung der beiden Lochblenden 102 und 104 bedeutet dies, dass die beleuchtete Fläche auf der zu vermessenden Oberfläche (nicht dargestellt) mittels des Objektivs 106 auf eine möglichst kleine Fläche abgebildet wird, die mit der Öffnung der zweiten Lochblende 104 zusammenfällt. Aus dem Verlauf 109 der Lichtintensität, insbesondere aus der genauen Lage des Maximums 111, kann der Abstand von dem entsprechenden Punkt der zu vermessenden Oberfläche zu dem Sensor 100 ermittelt werden. Ein gesamtes dreidimensionales Oberflächenprofil einer unbekannten Struktur wird dann durch sequentielle Abstandsmessungen zwischen dem Sensor 100 und einzelnen Punkten auf der zu vermessenden Oberfläche ermittelt.

Gemäß dem konfokalen Prinzip sind Beleuchtungs- und Detektionspfad identisch, d.h. das auf die zu erfassende Oberfläche auftreffende und das von der zu erfassenden Oberfläche reflektierte Licht verlaufen koaxial und Abschattungsphänomene sind im allgemeinen zu vernachlässigen. Ein weiterer Vorteil der konfokalen Abstandsmessung besteht darin, dass nicht der Absolutwert der zurückreflektierten Lichtintensität, sondern lediglich die relative Lichtintensität erfasst werden muss. Damit ist die konfokale Abstandmessung nahezu unabhängig von den Streu- oder Reflexionseigenschaften der zu erfassenden Objektoberfläche. Die Verwendung eines punktförmigen Lichtdetektors bewirkt außerdem, dass Mehrfachreflexionen auf dreidimensionalen Objektoberflächen nicht zu Falschmessungen führen. Ein weiterer wichtiger Vorteil des konfokalen Prinzips besteht in der hohen Messgenauigkeit bis in den Submikrometerbereich, so dass die mit der zunehmenden Miniaturisierung von Bauelementen verbundenen Genauigkeitsanforderungen in der Elektronikfertigung auf einfache Weise erreicht werden.

Aus der US 5,887,009 ist ein konfokales optisches Abtastsystem bekannt, welches einen in einem Lichtwellenleiter ausgebildeten Laserresonator aufweist. Aus dem Laserresonator wird über eine Endfläche des Lichtwellenleiters, welche einen Auskoppelspiegel darstellt, Beleuchtungslicht ausgekoppelt. Das Beleuchtungslicht wird mittels einer fokussierenden Linse auf die Oberfläche eines zu vermessenden Objekts gelenkt. Von dieser Oberfläche zumindest teilweise zurück gestreutes Messlicht wird nach einem einmaligen Durchgang durch den Laserresonator von einem Photodetektor erfasst. Zum Abtasten des Objekts kann dieses relativ zur fokussierenden Linse entlang dreier Raumrichtungen bewegt werden. Ebenso kann auch der Abstand zwischen der Endfläche und der Linse durch eine Bewegung des Lichtwellenleiters variiert werden.

Aus der US 5,785,651 und der US 4,585,349 ist jeweils ein konfokaler Abstandssensor bekannt, der eine Abbildungsoptik aufweist, welche infolge einer chromatischen Abberation unterschiedliche Spektralanteile eines bevorzugt weißen Beleuchtungslichts in unterschiedlichen Abständen von der Abbildungsoptik fokussiert. Durch eine entsprechende Farbanalyse des von einer zu vermessenden Objektoberfläche zurück gestreuten Messlichts kann der Abstand zwischen der zu vermessenden Oberfläche und dem Abstandssensor ermittelt werden. Bei dem in der US 5,785,651 beschriebenen Abstandssensor sind Lichtquelle und zugleich Lichtdetektor durch das Ende eines Lichtwellenleiters realisiert. Zur gleichzeitigen Vermessung eines Objekts an einer Mehrzahl von Abtastpunkten können auch mehrere Lichtwellenleiter-Enden in Form eines ein- oder zweidimensionalen Arrays angeordnet werden, wobei jedem Lichtwellenleiter-Ende eine individuelle Abbildungsoptik zugeordnet ist.

Aus der DE 101 25 885 ist eine Sensorvorrichtung zur schnellen optischen Abstandsmessung nach dem konfokalen optischen Abbildungsprinzip bekannt, bei der sowohl die punktförmige Lichtquelle als auch der punktförmige Detektor durch das Ende eines Lichtwellenleiters realisiert ist. Das andere Ende des Lichtwellenleiters ist in zwei Teilenden aufgespalten, wobei ein erstes Teilende mit einer Lichtquelle und das zweite Teilende mit einem Lichtdetektor gekoppelt ist. Das aus dem Lichtwellenleiter austretende Beleuchtungslicht wird an einem Umlenkspiegel reflektiert und über eine Abbildungsoptik in den Objektbereich der Sensorvorrichtung fokussiert. Der Umlenkspiegel ist relativ zur Abbildungsoptik mittels einer Verschiebevorrichtung verschiebbar, so dass eine Bewegung des Umlenkspiegels objektseitig zu einer Verschiebung der Fokusposition des Beleuchtungslichts führt. Das von der zu vermessenden Oberfläche zurückgestreute Licht wird über die Abbildungsoptik und den beweglichen Reflektor auf das Ende des Lichtwellenleiters gelenkt und in diesen eingekoppelt. Die eingekoppelte Lichtintensität wird von dem mit dem zweiten Teilende gekoppelten Lichtdetektor erfasst. Diese Sensorvorrichtung hat den Nachteil, dass für eine präzise Abstandsmessung eine genaue Justage von Lichtwellenleiter, beweglicher Reflektor und Abbildungsoptik erforderlich ist. Ein weiterer Nachteil besteht darin, dass der Umlenkreflektor relativ großflächig sein muss, um das aus dem Lichtwellenleiter austretende divergente Beleuchtungslicht sowie das in den Lichtwellenleiter eintretende konvergente Messlicht möglichst vollständig zu reflektieren. Somit kann die Sensorvorrichtung nicht in einer derart kleinen und kompakten Bauform realisiert werden, welche für viele moderne Anwendungen wie beispielsweise eine Schweißnahtinspektion mittels eines Roboterarms erforderlich wäre.

Der Erfindung liegt somit die Aufgabe zugrunde, einen konfokalen Sensor zur schnellen optischen Abstandsmessung zu schaffen, welcher als mehrkanaliger Abstandssensor in einer kompakten Bauweise realisiert werden kann.

Diese Aufgabe wird gelöst durch einen Sensor mit den Merkmalen des unabhängigen Anspruchs 1.

Der Erfindung liegt die Erkenntnis zugrunde, dass durch eine Bewegung eines punktförmigen optischen Elementes, welches eingerichtet ist sowohl zum Aussenden von Beleuchtungslicht als auch zum Empfang von Messlicht, auf einfache Weise ein konfokaler Sensor realisiert werden kann, ohne dass weitere Komponenten des Sensors bewegt werden müssen. Gemäß der Erfindung wird im Verlauf der Bewegung des optischen Elementes das aus dem punktförmigen optischen Element austretende Beleuchtungslicht von der Abbildungsoptik zumindest einmal exakt auf die zu vermessende Oberfläche fokussiert. Das Beleuchtungslicht wird dann von der zu vermessenden Oberfläche zumindest teilweise als Messlicht zurückreflektiert bzw. zurückgestreut. Aus dem Intensitätsverlauf des Messlichts in Abhängigkeit von der Position des optischen Elements relativ zur Abbildungsoptik kann der Abstand zwischen dem Sensor und der zu vermessenden Oberfläche bestimmt werden. Da durch die Bewegung des optischen Elements auf der Objektseite der Abbildungsoptik unmittelbar eine Fokusverschiebung auftritt, ist bei dem erfindungsgemäßen konfokalen Sensor weder eine Relativbewegung zwischen Sensor und zu vermessendem Objekt noch die Verwendung von anderen beweglichen optischen Komponenten wie beispielsweise ein verschiebbar gelagerter Reflektor erforderlich.

Der erfindungsgemäße konfokale Sensor umfasst eine Mehrzahl von punktförmigen optischen Elementen, welche auf einem eindimensionalen Raster angeordnet sind. Dabei ist jedes optische Element sowohl mit einer Lichtquelle als auch mit einem Lichtdetektor optisch gekoppelt. Dies hat den Vorteil, dass simultan mehrere Oberflächenpunkte vermessen werden können und somit ein kompakter vielkanaliger Abstandssensor realisiert werden kann. Die verschiedenen optischen Elemente können entweder durch eine gemeinsame Verschiebevorrichtung oder alternativ durch mehrere verschiedene Verschiebevorrichtungen bewegt werden, wobei jeweils ein optisches Element mit einer Verschiebevorrichtung mechanisch gekoppelt ist. Ein weiterer Vorteil besteht darin, dass eine zweidimensionale Oberfläche durch lediglich eine transversale Relativbewegung zwischen der Oberfläche und dem Sensor abgetastet werden kann.

Bei dem erfindungsgemäßen konfokalen Sensor sind ferner die punktförmigen optischen Elemente zumindest in zwei Gruppen aufgeteilt, die jeweils kammartig angeordnet sind. Dabei greifen die optischen Elemente aus verschiedenen Gruppen aus unterschiedlichen, bevorzugt aus gegenüberliegenden Richtungen ineinander. Auf diese Weise können die optischen Elemente besonders eng benachbart angeordnet werden, so dass eine geringe Rasterbreite des vielkanaligen Abstandssensors realisiert werden kann.

Die Realisierung des optischen Elements mittels eines ersten Endes eines Lichtwellenleiters gemäß Anspruch 2 hat den Vorteil, dass das optische Element mit einer kleinen Masse realisiert werden kann, so dass eine schnelle Bewegung des optischen Elements und damit eine hohe Datenrate erzielbar ist.

Es wird darauf hingewiesen, dass dem Fachmann auch andere Realisierungsmöglichkeiten des punktförmigen optischen Elements bekannt sind. So kann beispielsweise eine Kombination aus einer lichtempfangenden Photodiode mit einer lichtaussendenden Leucht- bzw. Laserdiode verwendet werden. Wird die lichtaussendende Diode aus Sicht der Abbildungsoptik hinter der Photodiode angeordnet, so muss zur Realisierung des optischen Elements lediglich eine optisch teildurchlässige Photodiode verwendet werden. Bei umgekehrter Anordnung von lichtaussendender und lichtempfangender Diode müsste die Leucht- bzw. Laserdiode optisch teildurchlässig sein.

Die Mikrolinse gemäß Anspruch 3 kann beispielsweise unmittelbar auf das erste Ende des Lichtwellenleiters aufgesetzt oder durch ein gezieltes lokales Aufschmelzen des ersten Endes des Lichtwellenleiters erzeugt werden. In jedem Fall gewährleistet eine fokussierenden Mikrolinse eine hohe Divergenz des austretenden Beleuchtungslichts und damit eine hohe numerische Apparatur des konfokalen Sensors, so dass verbunden mit einer geringen Fokus-Tiefenschärfe eine hohe Tiefenauflösung realisiert wird.

Der Umlenkspiegel gemäß Anspruch 4 kann beispielsweise unmittelbar aufgesetzt oder durch ein gezieltes mikromechanisches Anschleifen und anschließendes Verspiegeln des ersten Endes des Lichtwellenleiters erzeugt werden. Der Vorteil dieses Ausführungsform besteht darin, dass die Lichtwellenleiter auch winklig und insbesondere bei einem um 45° zur Achse des Lichtwellenleiters geneigten Spiegel auch senkrecht zur optischen Achse des austretenden Beleuchtungslichts angeordnet werden können.

Die periodische Bewegung der Verschiebevorrichtung nach Anspruch 5 hat den Vorteil, dass der Abstand eines zu vermessenden Oberflächenpunktes mehrmals hintereinander gemessen werden kann und dieser Abstand dann durch Mittelung über mehrere Einzelmessungen besonders genau ermittelbar ist.

Die Verwendung eines elektromagnetischen, eines piezoelektrischen und/oder eines mikromechanisch kapazitiven Antriebs zur Bewegung des optischen Elements ermöglicht eine besonders hochfrequente Bewegung des optischen Elements. Auf diese Weise kann eine besonderes hohe Datenrate des konfokalen Sensors erzielt werden. Besonders bevorzugt erscheint derzeit die elektromagnetische Antriebsform, bei der ein elektromagnetisch angetriebener Oszillator nach dem Prinzip einer angetriebenen Stimmgabel verwendet wird. Alternativ kann auch ein aus herkömmlichen Lautsprechern bekannter Tauchspulenantrieb verwendet werden.

Gemäß Anspruch 7 weist die Abbildungsoptik eine Sammellinse auf. Im einfachsten Fall besteht die Abbildungsoptik lediglich aus einer einzigen Sammellinse, so dass die Optik auf einfache, auf preiswerte und insbesondere auf kompakte Weise realisiert werden kann.

Die Ausführungsform nach Anspruch 8 hat den Vorteil, dass die Komponenten des Abstandssensors in zwei verschiedenen, räumlich getrennten Modulen eingebaut werden können. Besonders vorteilhaft erweist sich, wenn Lichtquelle, Lichtdetektor und die elektronischen Komponenten eines Sensors in einem ersten Modul angeordnet sind. Nur diejenigen Sensorkomponenten wie beispielsweise die Abbildungsoptik, das punktförmige optische Element und die Verschiebevorrichtung müssen in einem zweiten Modul enthalten sind, da diese Komponenten sich entsprechend des konfokalen Abbildungsprinzips nahe an der zu untersuchenden Objektoberfläche befinden müssen. Dies hat den Vorteil, dass der konfokale Sensor insbesondere objektseitig besonders klein aufgebaut werden kann.

Die Aufspaltung des Lichtwellenleiters in zwei Teilenden gemäß Anspruch 9 erfolgt bevorzugt mittels eines Lichtwellenleiter-Kopplungsgliedes. Dies hat den Vorteil, dass eine Justierung der Lichtquelle und des Lichtdetektors relativ zu dem zweiten Ende des Lichtwellenleiters nicht erforderlich ist. Als Lichtwellenleiter-Kopplungsglied kann beispielsweise ein sog. Schmelzkoppler oder auch ein kommerziell erhältliches Kopplungslied in Freistrahlanordnung sein.

Weitere Vorteile und Merkmale der vorliegenden Erfindung ergeben sich aus der nachfolgenden beispielhaften Beschreibung von derzeit bevorzugten Ausführungsformen.
- Figur 1: zeigt eine schematische Darstellung zur Erläuterung des konfokalen Abbildungsprinzips zur Abstandsmessung gemäß dem Stand der Technik.
- Figur 2: zeigt einen modular aufgebauten konfokalen Abstandssensor gemäß einem ersten Beispiel
- Figur 3: zeigt in einer schematischen Querschnittsansicht ein zweites Beispiel mit einem Lichtwellenleiter, der in einem Winkel von 90° relativ zu der optischen Achse des Beleuchtungslichts angeordnet ist.
- Figur 4: zeigt eine erfindungsgemässe kammartige Anordnung einer Mehrzahl von Lichtwellenleitern mit jeweils einer am Ende des Lichtwellenleiters angebrachten Mikrolinse.

An dieser Stelle bleibt anzumerken, dass sich in der Zeichnung die Bezugszeichen einander entsprechender Komponenten lediglich in ihrer ersten Ziffer unterscheiden.

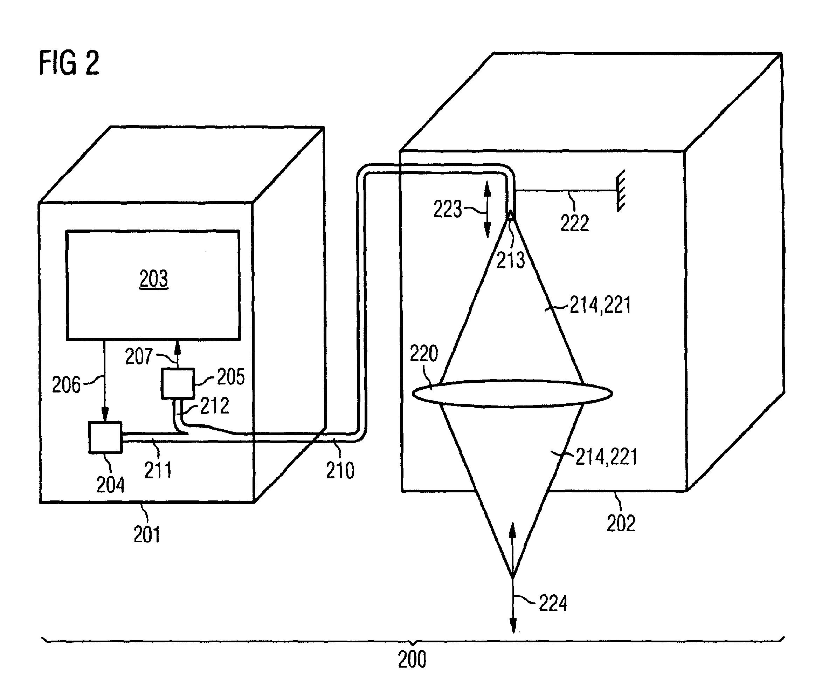

Fig.2 zeigt einen modular aufgebauten konfokalen Abstandssensor 200 mit einem ersten Modul 201 und einem zweiten Modul 202 gemäß einem ersten Beispiel. Das erste Modul 201 enthält ein Elektronikmodul 203, einen als Lichtquelle dienenden Laser 204 und eine als Lichtdetektor dienende Photodiode 205. Der Laser 204 ist über die Anschlussleitung 206 mit dem Elektronikmodul 203 gekoppelt. Die Photodiode 205 ist über die Anschlussleitung 207 mit dem Elektronikmodul 203 gekoppelt. Das erste Modul 201 ist mittels eines Lichtwellenleiters 210 mit dem zweiten Modul 201 optisch gekoppelt. Ein Ende des Lichtwellenleiters 210 ist in ein erstes Teilende 211 und ein zweites Teilende 212 aufgespalten. Das erste Teilende 211 ist mit dem Laser 204 gekoppelt. Das zweite Teilende 212 ist mit der Photodiode 205 gekoppelt. Das andere Ende 213 des Lichtwellenleiters 210 ist innerhalb des zweiten Moduls 202 angeordnet. Es dient sowohl als punktförmige Lichtquelle als auch als punktförmige Empfängerfläche.

Das zweite Modul 202 weist ferner eine Sammellinse 220 und eine Verschiebevorrichtung zum Variieren des optischen Weges zwischen dem Ende 213 des Lichtwellenleiters 210 und der Sammellinse 220 auf. Die Verschiebevorrichtung ist eine Stimmgabel 222, die elektromagnetisch angetrieben wird. Durch eine entsprechende Bewegung der Stimmgabel 222 wird das Ende 213 in Form einer periodischen Bewegung parallel zu der optischen Achse des von dem Ende 213 emittierten Beleuchtungslichts 214 bewegt. Die Sammellinse 220 ist ebenfalls bevorzugt symmetrisch auf der optischen Achse des Beleuchtungslichts 214 angeordnet. Das von dem Ende 213 des Lichtwellenleiters 210 ausgesendete Beleuchtungslicht 214 trifft direkt ohne Zwischenschaltung einer anderen optischen Komponente auf die Sammellinse 220. Diese fokussiert das Beleuchtungslicht 214 auf die zu vermessende Oberfläche (nicht dargestellt). Das Beleuchtungslicht 214 wird von der Oberfläche zumindest teilweise reflektiert bzw. gestreut. Davon trifft ein Teil als Messlicht 221 erneut auf die Sammellinse 220 und wird von dieser auf das Ende 213 des Lichtwellenleiters 210 fokussiert.

Das auf das Ende 213 treffende Licht wird zumindest teilweise in den Lichtwellenleiter 210 eingekoppelt und das eingekoppelte Licht wird wiederum zumindest teilweise über das zweite Teilende 212 des Lichtwellenleiters 210 von der Photodiode 205 erfasst. Das Ende 213 dient demzufolge als konfokal angeordneter Punktdetektor.

Wird nun das Ende 213 des Lichtwellenleiters 210 mittels der Stimmgabel 222 in axialer Richtung innerhalb des Verschiebebereiches 223 bewegt, so findet im Objektbereich, d.h. auf der dem Ende 213 gegenüberliegenden Seite der Sammellinse 220, eine Verschiebung des Fokus innerhalb des Verschiebebereiches 223 statt. Genau dann, wenn der Fokus mit einem minimalen Querschnitt auf die zu untersuchende Oberfläche trifft, detektiert aufgrund der konfokalen Anordnung die Photodiode 205 eine maximale Lichtintensität. Durch die Messung der von der Photodiode 205 detektierten Lichtintensität als Funktion der Position des Endes 213 kann der Abstand der Objektoberfläche von der Sammellinse 220 gemessen werden.

Es wird darauf hingewiesen, dass zwangsläufig eine exakt konfokale Anordnung der punktförmigen Lichtquelle zu dem punktförmigen Lichtdetektor vorliegt, da beide Elemente durch ein und dasselbe optische Element realisiert sind. Dieses Element ist gemäß dem hier beschriebenen Ausführungsbeispiel das Ende 213 des Lichtwellenleiters 210.

Da in dem zweiten Modul 202 als optische Komponenten lediglich das Ende 213 des Lichtwellenleiters 210 und die Sammellinse 220 benötigt werden, kann das zweite Modul 202 in einer sehr kompakten Bauform räumlich getrennt von dem ersten Modul 210 realisiert werden. Gemäß dem hier beschriebenen Ausführungsbeispiel weist das Modul 202 eine Höhe von ungefähr 4 cm, eine Breite von ungefähr 4 cm und eine Tiefe von ungefähr 3 cm auf.

Die Höhenauflösung des hier beschriebenen Sensors 200 beträgt ungefähr 2 µm. Da das optische Element in Form eines Endes 213 eines ca. 10 µm dicken Lichtwellenleiters 210 realisiert werden kann, muss zur Fokusverschiebung nur eine sehr kleine Masse bewegt werden. Zu einer kleinen bewegten Masse kann auch ein Entfernen einer in der Regel bei sog. Monomode-Fasern vorhandenen Faserummantelung zumindest im Bereich des Endes 213 des Lichtwellenleiters 210 führen.

Die Bewegung des Endes 213 kann auf vorteilhafte Weise mittels einer elektromagnetisch angetriebenen Stimmgabel erfolgen. Eine derartige Stimmgabel ist bereits in DE 196 08 468 C2 beschrieben. Alternativ kann das Ende 213 auch mittels eines Tauchspulenantriebs bewegt werden, welcher in handelsüblichen Lautsprechern zum Einsatz kommt. Die Verschiebevorrichtung kann jedoch auch mittels einer mikromechanischen Lösung realisiert werden. Dabei wird der für die Verschiebevorrichtung erforderliche Antrieb beispielsweise mittels Silizium-Ätztechnik hergestellt und das Ende 213 mechanisch an den Antrieb gekoppelt.

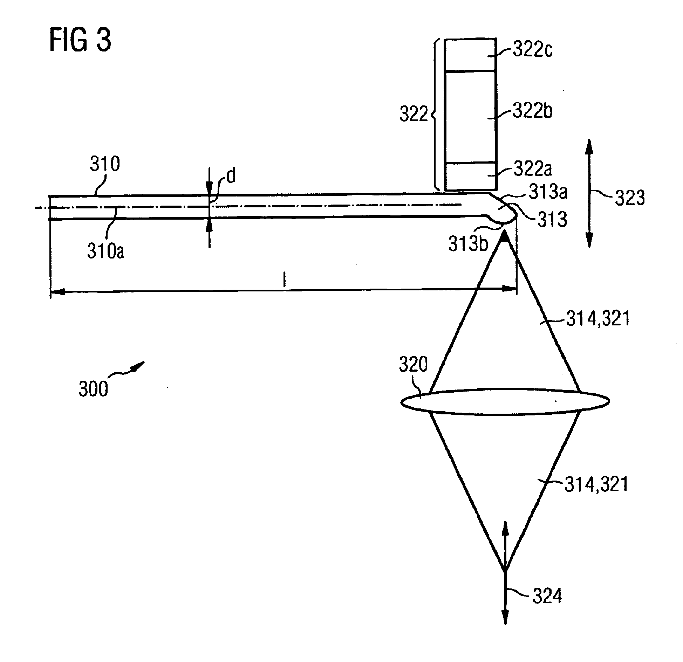

Figur 3 zeigt eine Seitenansicht eines zweiten Beispiels in schematischer Darstellung. Das optische Element ist erneut mittels eines Endes 313 eines Lichtwellenleiters 310 realisiert. Das Ende 313 weist einen verspiegelten Anschliff 313a sowie eine fokussierende Krümmung 313b auf. Der verspiegelte Anschliff 313a ist bevorzugt um 45° gegen die Achse 310a des Lichtwellenleiters 310 geneigt, so dass das aus dem Ende 313 austretende Beleuchtungslicht 314 innerhalb eines konzentrischen Kegels um eine zu der Achse 310a senkrechte optische Achse emittiert wird. Die fokussierende Krümmung 313b, welche dafür sorgt, dass das austretende Beleuchtungslicht 314 eine hohe Divergenz aufweist, kann beispielsweise durch ein gezieltes Aufschmelzen des Endes 313 des Lichtwellenleiters 310 oder durch ein mikromechanisches Aufsetzen einer Mikrolinse auf das Ende 313 des Lichtwellenleiters 310 realisiert werden.

Die Verschiebung des Endes 313 innerhalb des Verschiebebereiches 323 erfolgt mittels einer Stimmgabel 322, welche einen vorderen Abschnitt 322a, einen mittleren Abschnitt 322b und einen hinteren Abschnitt 322c aufweist. Die Stimmgabel 322 ist stufenförmig ausgebildet, wobei der vordere Stimmgabelabschnitt 322a der Befestigung des Endes 313 dient, der mittlere Stimmgabelabschnitt 322b die Federwirkung der Stimmgabel 322 gewährleistet und der hintere Stimmgabelabschnitt 322c zu einer Befestigung der Stimmgabel 322 an dem nicht dargestellten Gehäuses des Sensors 300 dient.

Der Lichtwellenleiter 310 weist einen Durchmesser d von ca. 10 µm und eine Länge 1 von ca. 1 bis 10 mm auf. Der Radius der fokussierenden Krümmung beträgt ca. 7 µm. Die Funktion der Sammellinse, der Fokusverschiebung 324 sowie des Messlichts 321 wurden bereits zuvor im Zusammenhang mit der Beschreibung von Figur 2 erläutert.

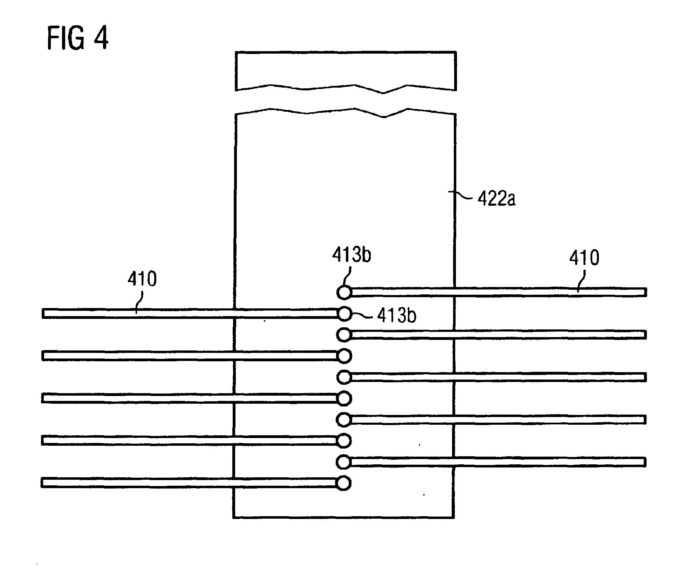

Figur 4 zeigt eine schematische Darstellung eines 10-kanaligen konfokalen Abstandssensors gemäß einem Ausführungsbeispiel der Erfindung. Die insgesamt 10 Lichtwellenleiter 410 sind in zwei Gruppen aufgeteilt, wobei die Lichtwellenleiter 410 einer jeden Gruppe jeweils auf einer kammartigen Halterung angeordnet sind. Die beiden kammartigen Halterungen sind derart zueinander angeordnet, dass die fokussierenden Krümmungen 413b, welche jeweils an den Enden der Lichtwellenleiter 410 ausgebildet sind, entlang eines eindimensionalen Rasters angeordnet sind. Sämtliche Enden der Lichtwellenleiter 410 sind an einem vorderen Stimmgabel-Abschnitt 422a befestigt und werden senkrecht zu der Zeichenebene bewegt. Somit resultiert nach dem Durchtritt des von jedem der fokussierenden Krümmungen 413b ausgesandten Beleuchtungslichts durch eine in Figur 4 nicht dargestellte Abbildungsoptik objektseitig eine Fokusverschiebung. Die Wirkungsweise dieser Fokusverschiebung wurde bereits zuvor anhand von Figur 2 und Figur 3 erläutert.

Der Abstand der einzelnen fokussierenden Krümmungen 413b voneinander beträgt ca. 10 µm. Die Lichtwellenleiter 410 sind sog. Single-Mode optische Fasern, welche jeweils an ihrem Ende von ihrer Faserummantelung befreit sind und auf den vorderen Stimmgabel-Abschnitt 422a aufgeklebt sind. Die zusätzliche Masse durch die Lichtwellenleiter 410 und Störeinflüsse auf die Schwingung der gesamten Stimmgabel durch die elastischen Eigenschaften der Lichtwellenleiter 410 oder durch die Masse des verwendeten Klebstoffs sind in sehr guter Näherung vernachlässigbar.

Zusammenfassend schafft die Erfindung einen konfokalen Abstandssensor mit einem punktförmigen optischen Element, eingerichtet sowohl zum Ausenden von Beleuchtungslicht als auch zum Empfang von Messlicht, mit einer Abbildungsoptik zum Fokussieren des Beleuchtungslichts in einen Objektbereich und zum Fokussieren von durch eine Objektoberfläche zurückgestreuten Messlicht in einen Bereich um das optische Element und mit einer Verschiebevorrichtung zum Variieren des optischen Weges zwischen dem optischen Element und der Abbildungsoptik. Gemäß der Erfindung ist die Verschiebevorrichtung unmittelbar zum Bewegen des optischen Elements relativ zu der Abbildungsoptik eingerichtet und das von dem optischen Element ausgesandte Beleuchtungslicht trifft unmittelbar auf die Abbildungsoptik. Bevorzugt wird das optische Element mittels eines Endes eines Lichtwellenleiters realisiert. Die Erfindung kann zum Bau eines mehrkanaligen optischen Abstandssensors, verwendet werden, indem mehrere Lichtwellenleiter auf einem eindimensionalen oder zweidimensionalen Raster angeordnet werden und gemeinsam oder unabhängig voneinander relativ zu einer einzigen Abbildungsoptik verschoben werden.

## Patentansprüche

1. Sensor zur optischen Abstandsmessung nach dem konfokalen Abbildungsprinzip zur Ermittlung von Abstands- und/oder Höhenwerten einer Oberfläche, insbesondere zur dreidimensionalen Oberflächenvermessung, mit
• einem punktförmigen optischen Element (213, 313), eingerichtet
- zum Aussenden von Beleuchtungslicht (214, 314) und
- zum Empfang von Messlicht (221, 321),
• einer Abbildungsoptik (220, 320)
- zum Fokussieren des Beleuchtungslichts (214, 314) in einen Objektbereich und
- zum Fokussieren von durch die Oberfläche eines in dem Objektbereich befindlichen Objekts zumindest teilweise zurückgestreutem Messlicht (221, 321) in einen Bereich um das optische Element (213, 313), und
• einer Verschiebevorrichtung (222, 322) zum Variieren des optischen Weges zwischen dem optischen Element (213, 313) und der Abbildungsoptik (220, 320),
welche Verschiebevorrichtung (222, 322) unmittelbar zum Bewegen des optischen Elements (213, 313) relativ zu der Abbildungsoptik (220, 320) eingerichtet ist,
**dadurch gekennzeichnet,**
- **dass** eine Mehrzahl von punktförmigen optischen Elementen (413b) vorgesehen ist, welche auf einem eindimensionalen Raster angeordnet sind, und
- **dass** die punktförmigen optischen Elemente (413b) zumindest in zwei Gruppen aufgeteilt sind, die jeweils kammartig angeordnet sind, wobei die punktförmigen optischen Elemente (413b) aus verschiedenen Gruppen aus unterschiedlichen, bevorzugt aus gegenüberliegenden Richtungen ineinander greifen.

2. Sensor nach Anspruch 1, bei dem
das optische Element (213, 313) ein erstes Ende (213, 313) eines Lichtwellenleiters (210, 310) ist.

3. Sensor nach Anspruch 2, bei dem
das erste Ende (213, 313) des Lichtwellenleiters (210, 310) eine Mikrolinse (313b) aufweist.

4. Sensor nach einem der Ansprüche 2 bis 3, bei dem
das erste Ende (313) des Lichtwellenleiters (310) einen Umlenkspiegel (312a) aufweist.

5. Sensor nach einem der Ansprüche 1 bis 4, bei dem
die Verschiebevorrichtung (222, 322) eingerichtet ist zum periodischen Bewegen des optischen Elements (213, 313).

6. Sensor nach einem der Ansprüche 1 bis 5, bei dem
das optische Element (213, 313) mittels eines elektromagnetischen, eines piezoelektrischen und/oder eines mikromechanischen kapazitiven Antriebs bewegt wird.

7. Sensor nach einem der Ansprüche 1 bis 6, bei dem
die Abbildungsoptik eine Sammellinse (220, 320) aufweist.

8. Sensor nach einem der Ansprüche 2 bis 7, bei dem
ein zweites Ende des Lichtwellenleiters (210) sowohl mit einer Lichtquelle (204) als auch mit einem Lichtdetektor (205) optisch gekoppelt ist.

9. Sensor nach Anspruch 8, bei dem
das zweite Ende des Lichtwellenleiters (210) in zwei Teilenden (211, 212) aufgespalten ist, wobei
ein erstes Teilende (211) mit der Lichtquelle (204) und ein zweites Teilende (212) mit dem Lichtdetektor (205) optisch gekoppelt ist.

## Claims

1. Sensor for optical distance measurement according to the confocal imaging principle for determination of distance and/or height values of a surface, especially for three-dimensional surface measurement, with
• a point-type optical element (213, 313), configured
- for emitting illumination light (214, 314) and
- for receiving measurement light (221, 321),
• imaging optics (220, 320)
- for focusing the illumination light (214, 314) in an object area and
- for focusing measurement light (221, 321) scattered back at least partly by the surface of an object located in the object area into an area around the optical element (213, 313), and
• a movement device (222, 322) for varying the optical path between the optical element (213, 313) and the imaging optics (220, 320),
with said movement device (222, 322) being configured for direct movement of the optical element (213, 313) relative to the imaging optics (220, 320),
**characterised in that**
- a plurality of point-type optical elements (413b) is provided which are arranged on a one-dimensional grid, and
- that the point-type optical elements (413b) are divided up into at least two groups which are each arranged in a comb-shaped arrangement, with the point-type optical elements (413b) from different groups intermeshing with each other from different, preferably from opposite directions.

2. Sensor according to claim 1, in which
the optical element (213, 313) is a first end (213, 313) of an optical waveguide (210, 310) is.

3. Sensor according to claim 2, in which
the first end (213, 313) of the optical waveguide (210, 310) features a micro lens (313b).

4. Sensor according to one of the claims 2 to 3, in which the first end (313) of the optical waveguide (310) features a deflection mirror (312a).

5. Sensor according to one of the claims 1 to 4, in which the movement direction (222, 322) is configured for periodic movement of the optical element (213, 313).

6. Sensor according to one of the claims 1 to 5, in which the optical element (213, 313) is moved by means of an electromagnetic, a piezoelectric and/or a micromechanical capacitive drive.

7. Sensor according to one of the claims 1 to 6, in which the imaging optics features a collecting lens (220, 320).

8. Sensor according to one of the claims 2 to 7, in which
a second end of the optical waveguide (210) is optically coupled both to a light source (204) and also to a light detector (205).

9. Sensor according to claim 8, in which
the second end of the optical waveguide (210) is split into two part ends (211, 212), with
a first part end (211) being optically coupled to the light source (204) and a second part end (212) to the light detector (205).

## Revendications

1. Capteur pour la mesure de distance optique selon le principe de reproduction à foyer commun pour déterminer des valeurs de distance et/ou des valeurs de hauteur d'une surface, en particulier pour une mesure de surface en trois dimensions, comprenant:
• un élément optique (213, 313) ponctuel, aménagé
- pour l'émission de lumière d'éclairage (214, 314), et
- pour la réception de lumière de mesure (221, 321),
• une optique de reproduction (220, 320)
- pour la focalisation de la lumière d'éclairage (214, 314) dans une zone d'objet et
- pour la focalisation de lumière de mesure (221, 321) au moins partiellement électrodiffusée par la surface d'un objet se trouvant dans la zone d'objet dans une zone autour de l'élément 213, 313) optique, et
• un dispositif de coulissement (222, 322) pour modifier la course optique entre l'élément optique (213, 313) et l'optique de reproduction (220, 320),
lequel dispositif de coulissement (222, 322) est aménagé directement pour le déplacement de l'élément optique (213, 313) par rapport à l'optique de reproduction (220, 320),
**caractérisé en ce que**
- une pluralité d'éléments optiques (413b) ponctuels est prévue, lesquels sont disposés sur une trame à une dimension, et
- **en ce que** les éléments optiques (413b) ponctuels sont divisés au moins en deux groupes, qui sont disposés chacun à la façon d'un peigne, les éléments optiques (413b) ponctuels provenant de différents groupes à partir de directions différentes, de préférence de directions opposées, sont emboîtés les uns dans les autres.

2. Capteur selon la revendication 1, dans lequel
l'élément optique (213, 313) est une première extrémité (213, 313) d'un guide d'ondes optiques (210, 310) .

3. Capteur selon la revendication 2, dans lequel
la première extrémité (213, 313) du guide d'ondes optiques (210, 310) présente une microlentille (313b).

4. Capteur selon l'une quelconque des revendications 2 à 3, dans lequel
la première extrémité (313) du guide d'ondes optiques (310) présente un miroir de déviation (312a).

5. Capteur selon l'une quelconque des revendications 1 à 4, dans lequel
le dispositif de coulissement (222, 322) est aménagé pour le déplacement périodique de l'élément optique (213, 313).

6. Capteur selon l'une quelconque des revendications 1 à 5, dans lequel
l'élément optique (213, 313) est déplacé au moyen d'un entraînement électromagnétique, d'un entraînement piézo-électrique et/ou d'un entraînement capacitif et micromécanique.

7. Capteur selon l'une quelconque des revendications 1 à 6, dans lequel
l'optique de reproduction présente une optique convergente (220, 320).

8. Capteur selon l'une quelconque des revendications 2 à 7, dans lequel
une seconde extrémité du guide d'ondes optiques (210) est couplée au plan optique aussi bien avec une source lumineuse (204) qu'avec un détecteur de lumière (205).

9. Capteur selon la revendication 8, dans lequel
la seconde extrémité du guide d'ondes optiques (210) est divisée en deux extrémités partielles (211, 212),
une première extrémité partielle (211) étant couplée au plan optique avec la source de lumière (204) et une seconde extrémité partielle (212) avec le détecteur de lumière (205).
